# EUROPEAN PATENT APPLICATION

(11) **EP 4 770 261 A1**
(43) Date of publication of application: **01.07.2026**
(21) Application number: 24855256.4
(22) Date of filing: 14.03.2024
(51) Int. Cl.: H04W 76/10

(54) **SUBCARRIER CONNECTION ESTABLISHMENT METHOD AND APPARATUS, STORAGE MEDIUM AND ELECTRONIC APPARATUS**

(30) Priority: 24.08.2023 CN 202311076494
(71) Applicant: ZTE CORPORATION, Shenzhen, Guangdong 518057 (CN)
(72) Inventor: WANG, Qilei, Shenzhen, Guangdong 518057 (CN)
(74) Representative: Chimini, Francesco
(86) International application number: PCT/CN2024/081746
(87) International publication number: WO 2025/039525

(57) **Abstract**

Provided are a method and apparatus for establishing a subcarrier connection, a storage medium, and an electronic apparatus. The method includes: determining following configuration parameters according to a first bit rate required by a client signal: a spectrum central frequency of an OTSi at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier; and establishing the subcarrier connection according to the configuration parameters.

## Description

### Cross-Reference to Related Application

The present disclosure claims the priority of Chinese Patent Application No.202311076494.7, filed with the China National Intellectual Property Administration on August 24, 2023, and entitled " SUBCARRIER CONNECTION FOR ESTABLISHMENT METHOD AND APPARATUS, STORAGE MEDIUM AND ELECTRONIC APPARATUS", which is incorporated in its entirety herein by reference.

### Technical Field

The present disclosure relates to the communication field, and specifically, to a method and apparatus for establishing a subcarrier connection, a storage medium, and an electronic apparatus.

### Background

Over the past decades, the optical layer network has undergone multiple rounds of changes, with some groundbreaking technologies leading and transforming the architecture of the optical layer network. The surge in network data volume enables network operators to achieve low cost expenditures while providing end-users with superior services. Notable technological breakthroughs include the erbium-doped fiber amplifier (EDFA), the photonic integrated circuit (PIC), the wavelength selective switch (WSS), etc., which facilitate the widespread industrial application of the reconfigurable optical add-drop multiplexer (ROADM) and coherent optical transmission.

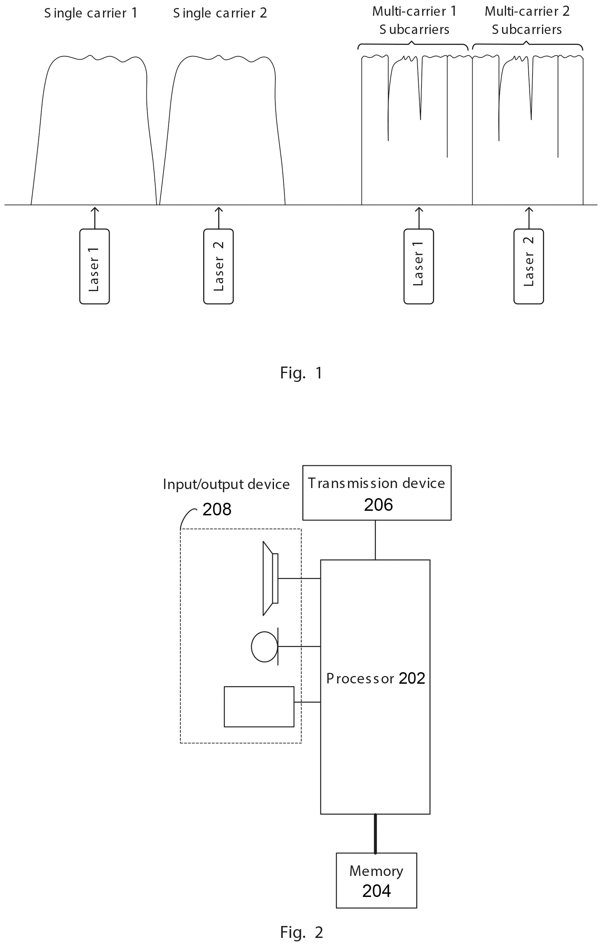

In mainstream optical layer networks, a single electrical layer client signal is typically converted into an optical layer signal through a modulator and then carried and transmitted by a single optical carrier. With the emergence and widespread industrial application of coherent technologies, it has become possible to replace single-carrier modulation with multi-subcarrier modulation at the digital level, which can also optimize the transmission distance and transmission performance of optical layer network systems. Fig. 1 illustrates a waveform diagram of a single-carrier and a multi-carrier, from which differences between the single-carrier and the multi-carrier can be discerned.

In the optical orthogonal frequency division multiplexing (OFDM) technology, a high-bit-rate electrical layer client signal data stream is divided into a plurality of low-bit-rate data streams, and each of these low-bit-rate data streams is modulated onto a separate subcarrier for transmission. Another method for subcarrier multiplexing, namely the Nyquist wavelength division carrier multiplexing method, involves shaping the signal into an approximately rectangular shape within the frequency at the transmitting end through a method for digital or optical filtering of a single subcarrier. Therefore, a plurality of subcarriers within the frequency domain can be transmitted in parallel without spacing, thereby improving spectral efficiency. With the advantages of simple implementation and high performance, this method has become a popular candidate for future ultra-high-rate optical transmission technologies.

Application scenarios of the subcarrier technology mainly include: in large commercial parks where multiple enterprises have significant traffic demands, the current passive optical network (PON) technology for access networks cannot meet traffic demands of 50G or more. The use of point-to-point (P2P) connections and point-to-multipoint (P2MP) subcarrier connection technologies can provide a large data bandwidth through a subcarrier binding method, meeting the traffic demands of the commercial parks. Additionally, from a hardware implementation perspective, the characteristic about scalability of the subcarrier technology also offers advantages.

However, in current relevant standard systems of ITU-T and the industry, networking architectures and management and control technologies for the subcarriers are lacking.

Currently, no effective solution has been proposed to solve the problem about the lack of the management and control technologies for the subcarriers in the related art.

Therefore, it is necessary to improve the related art to overcome the defects in the related art.

### Summary

The present disclosure provides a method and apparatus for establishing a subcarrier connection, a storage medium, and an electronic apparatus, to at least solve the problem of a lack of a management and control technology for subcarriers in the related art.

According to one aspect of the present disclosure, a method for establishing a subcarrier connection is provided. The method includes: determining following configuration parameters according to a first bit rate required by a client signal: a spectrum central frequency of an optical tributary signal (OTSi) at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier; and establishing the subcarrier connection according to the configuration parameters.

According to another aspect of the present disclosure, an apparatus for establishing a subcarrier connection is provided. The apparatus includes: a determination module, configured to determine following configuration parameters according to a first bit rate required by a client signal: a spectrum central frequency of an optical tributary signal (OTSi) at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier; and an establishment module, configured to establish the subcarrier connection according to the configuration parameters.

According to yet another aspect of the present disclosure, a computer-readable storage medium is also provided, and has a computer program stored therein. The computer program is configured to perform, during operation, the above-mentioned method for establishing a subcarrier connection.

According to still another aspect of the present disclosure, an electronic apparatus is further provided, and includes a memory, a processor, and a computer program stored on the memory and runnable on the processor. The above-mentioned processor performs the above-mentioned method for establishing a subcarrier connection through the computer program.

Through the present disclosure, the following configuration parameters are determined according to the first bit rate required by the client signal: the spectrum central frequency of the optical tributary signal (OTSi) at the transmitting end, the spectral width occupied by the OTSi at the transmitting end, the spectrum central frequency of the OTSi at the receiving end, the spectral width occupied by the OTSi at the receiving end, the bit rate that each subcarrier corresponding to the OTSi is allowed to provide, and the application code for the subcarrier; and the subcarrier connection is established according to the configuration parameters. In other words, by determining the relevant configuration parameters of the optical tributary signal (OTSi) corresponding to the transmitting end and the receiving end according to the first bit rate required by the client signal, and then establishing the subcarrier connection according to the configuration parameters, the technical problem of a lack of a management and control technology for subcarriers in the related art is solved.A technical effect of managing and controlling the subcarriers according to client signal requirements is achieved.

### Brief Description of the Drawings

The accompanying drawings illustrated herein are used for providing a further understanding of the present disclosure and form a part of the present disclosure. Exemplary embodiments of the present disclosure and descriptions thereof are used for explaining the present disclosure, and do not form improper limitations on the present disclosure. In the accompanying drawings:
Fig. 1 is a schematic diagram of waveforms of a single-carrier and a multi-carrier in the related art;
Fig. 2 is a block diagram of a hardware structure of a computer terminal of a method for establishing a subcarrier connection according to the present disclosure;
Fig. 3 is a flowchart of a method for establishing a subcarrier connection according to the present disclosure;
Fig. 4 is a schematic diagram of an end-to-end network architecture for an optical tributary signal (OTSi) according to an optional embodiment of the present disclosure;
Fig. 5 is an architectural diagram of network management and control for subcarriers in a P2P scenario according to an optional embodiment of the present disclosure;
Fig. 6 is a diagram of a network transmission architecture for a subcarrier downlink in a P2MP scenario according to an optional embodiment of the present disclosure;
Fig. 7 is a diagram of a network transmission architecture for a subcarrier uplink in a P2MP scenario according to an optional embodiment of the present disclosure; and
Fig. 8 is a structural block diagram of an apparatus for establishing a subcarrier connection according to the present disclosure.

### Detailed Description of the Embodiments

In order to make those skilled in the art better understand solutions of the present disclosure, the technical solutions in the present disclosure are clearly and completely described with reference to the accompanying drawings in the present disclosure as below, and it is apparent that the described embodiments are merely a part rather all embodiments of the present disclosure. Based on the embodiments of the present disclosure, all other embodiments obtained by those of ordinary skill in art without creative work shall fall within the scope of protection of the present disclosure.

It should be noted that the terms such as "first" and "second" of the specification and claims of the present disclosure, as well as the foregoing accompanying drawings are used to distinguish similar objects but are not necessarily intended to describe specific sequences or precedence orders. It should be understood that such used data is interchangeable where appropriate, such that the embodiments of the present disclosure described herein may be implemented in sequences other than those illustrated or described herein. In addition, the terms "include", "have", and any variations thereof are intended to encompass non-exclusive inclusions. For example, a process, a method, a system, a product, or a device including a series of steps or units is not necessarily limited to those explicitly-listed steps or units, but may include other steps or units that are not explicitly listed or inherent to the process, the method, the system, the product, or the device.

The method embodiments provided in the present disclosure may be performed in a computer terminal, or similar arithmetic units. Taking operation on the computer terminal as an example, Fig. 2 is a block diagram of a hardware structure of a computer terminal of a method for establishing a subcarrier connection according to the present disclosure. As shown in Fig. 2, the computer terminal may include one or more (only one is shown in Fig. 2) processors 202 (the processor 202 may include, but is not limited to, a microprocessor unit (MCU) or a programmable logic device (PLD) and a memory 204 configured to store data. In an exemplary embodiment, the above-mentioned computer terminal may further include a transmission device 206 configured with a communication function and an input/output device 208.Those of ordinary skill in the art can understand that a structure shown in Fig. 2 is only schematic and does not limit a structure of the above-mentioned computer terminal. For example, the computer terminal may further include more or fewer components than those shown in Fig. 2, or have configurations with equivalent functions or more functions compared to those shown in Fig. 2.

The memory 204 may be configured to store computer programs such as software programs and modules of application software, such as computer programs corresponding to the method for establishing a subcarrier connection in the present disclosure. The processor 202 performs various functional applications and data processing by operating the computer programs stored in the memory 204, thereby implementing the above-mentioned method. The memory 204 may include a high-speed random access memory, and may also include a non-volatile memory, such as one or more magnetic storage apparatuses, flash memories, or other nonvolatile solid-state memories. In some examples, the memory 204 may further include memories which are remotely set relative to the processor 202 and may be connected to the computer terminal through networks. The examples of the above-mentioned networks include, but are not limited to, an Internet, an intranet, a local area network, a mobile communication network, and a combination thereof.

The transmission device 206 is configured to receive or send data via one network. A specific example of the above-mentioned networks may include a wireless network provided by a communication supplier of the computer terminal. In an example, the transmission device 206 includes a network interface controller (NIC) which may be connected with other network devices through a base station so as to communicate with the Internet. In an example, the transmission device 206 may be a radio frequency (RF) module configured to communicate with the Internet in a wireless manner.

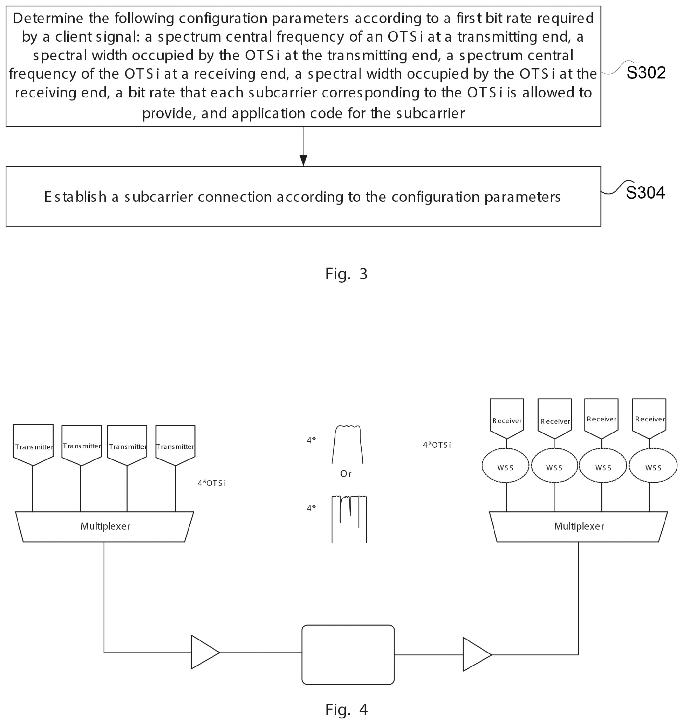

Fig. 3 is a flowchart of a method for establishing a subcarrier connection according to the present disclosure. As shown in Fig. 3, the method includes the steps:
S302: Determine following configuration parameters according to a first bit rate required by a client signal: a spectrum central frequency of an optical tributary signal (OTSi) at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier.
S304: Establish the subcarrier connection according to the configuration parameters.

It should be noted that after determining the configuration parameters, a management and control system sends the configuration parameters to a transmitter (i.e., the transmitting end) and a receiver (i.e., the receiving end) through a southbound interface to complete the establishment of the subcarrier connection.

Through the above-mentioned steps in the present disclosure, the following configuration parameters are determined according to the first bit rate required by the client signal: the spectrum central frequency of the optical tributary signal (OTSi) at the transmitting end, the spectral width occupied by the OTSi at the transmitting end, the spectrum central frequency of the OTSi at the receiving end, the spectral width occupied by the OTSi at the receiving end, the bit rate that each subcarrier corresponding to the OTSi is allowed to provide, and the application code for the subcarrier; and the subcarrier connection is established according to the configuration parameters. In other words, by determining the relevant configuration parameters of the optical tributary signal (OTSi) corresponding to the transmitting end and the receiving end according to the first bit rate required by the client signal, and then establishing the subcarrier connection according to the configuration parameters, the technical problem of a lack of a management and control technology for subcarriers in the related art is solved.

In an exemplary embodiment, before the step of determining following configuration parameters according to a first bit rate required by a client signal, the method further includes: determining a second bit rate of a data stream supported for transmission by a target end, and determining a bandwidth granularity of each subcarrier supported for modulation or demodulation by the target end, where the target end includes at least one of the following: the transmitting end or the receiving end, and the transmitting end is configured to modulate each subcarrier, while the receiving end is configured to demodulate each subcarrier; and determining, according to the second bit rate and the bandwidth granularity, that the OTSi includes m subcarriers, where each subcarrier corresponding to the OTSi is one of the m subcarriers, and m is an integer greater than 1.

Optionally, in the present disclosure, in a case where the transmitting end and the receiving end are root nodes, the transmitting end and the receiving end may be determined as the target ends. For example, in the following several cases: in a point-to-point case, if the transmitting end and the receiving end support the transmission and reception of data streams at a 400G bit rate, 400G is the second bit rate; in a downlink point-to-multipoint case: if the root node transmitting end supports the transmission of the data streams at the 400G bit rate, and five leaf nodes of the receiving end support the reception of data streams with a maximum bit rate of 100G, the 400G supported by the root node receiving end is the second bit rate; and in an uplink point-to-multipoint case: if the root node receiving end supports the reception of the data streams at the 400G bit rate, and five leaf nodes of the transmitting end support the transmission of data streams with a maximum bit rate of 100G, the 400G bit rate supported by the root node receiving end is considered the second bit rate.It should be noted that point-to-point refers to transmission of a data stream from one transmitting end to one receiving end. A point-to-multipoint downlink refers to a case where one transmitting end serves as a root node for data stream transmitting, and a plurality of receiving ends serve as leaf nodes for data stream reception. A point-to-multipoint uplink refers to a case where one receiving end serves as a root node for data stream reception, and a plurality of transmitting ends serve as leaf nodes for data stream transmitting.

Further, if the second bit rate is 400G and the bandwidth granularity is 25G, it may be determined that the OTSi with the second bit rate includes 16 subcarriers. It should be noted that in the present disclosure, a conventional 1:1 modulation relationship is adopted as a relationship between the transmitting end and an electrical layer client signal data stream, meaning that a single client signal data stream is directly modulated into an optical-layer OTSi signal, and accordingly a demodulation relationship of the receiver with respect to the optical-layer OTSi signal is also 1:1.It should also be noted that the bandwidth granularity of 25G is merely provided as an example and is not intended to limit the present disclosure.

In an exemplary embodiment, after the determining, according to the second bit rate and the bandwidth granularity, that the OTSi includes m subcarriers, the method further includes: determining a first central frequency of a spectrum of the OTSi and a first spectral width occupied by the spectrum; and determining, according to a value of m, the first central frequency, and the first spectral width, a second central frequency of each subcarrier and a second spectral width occupied by the spectrum .

It should be understood that for the spectral width: the first spectral width of the OTSi spectrum is evenly divided into m portions, yielding the second spectral width corresponding to each of the m subcarriers. For the central frequency: optionally, the first central frequency is divided by m to obtain a mean central frequency. A value corresponding to an m-th portion is then subtracted by the mean central frequency, namely (m - mean central frequency), to obtain a central frequency corresponding to the m-th subcarrier. For example, if the first central frequency is 8 and the first spectral width is 16, in a case of m = 16, namely equal division into 16 portions, the spectral width of each portion is 1, and the mean central frequency is 0.5. Then, the m-th portion is (m - 0.5). Accordingly, it can be inferred that the central frequencies of the m subcarriers should be 0.5, 1.5, 2.5, 3.5, 4.5, 5.5, 6.5, 7.5, 8.5, 9.5, 10.5, 11.5, 12.5, 13.5, 14.5, and 15.5 in sequence.

In an exemplary embodiment, the step of determining following configuration parameters according to a first bit rate required by a client signal: a spectrum central frequency of an optical tributary signal (OTSi) at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier includes: determining, according to the bandwidth granularity, a minimum number n of subcarriers required by the client signal; allocating n consecutive subcarriers from the m subcarriers to the client signal according to the minimum number n, where n is an integer greater than 1; and determining the configuration parameters according to the n consecutive subcarriers.

Optionally, the first bit rate corresponding to the client signal may be divided by the bandwidth granularity. In a case of exact division, an obtained result is n. In a case of no exact division, n=(an obtained result + 1).Moreover, it should be noted that the sub-carriers allocated to each client signal should be contiguous.

Exemplarily, a client signal 1 requires a bandwidth of 48G bit rate, a client signal 2 requires a bandwidth of 100G bit rate, and a client signal 3 requires a bandwidth of 20G bit rate, with a bandwidth granularity of 25G and a total of 16 subcarriers consecutively numbered from 1 to 16. Then, the client signal 1 requires 2 subcarriers, the client signal 2 requires 4 subcarriers, and the client signal 3 requires 1 subcarrier. Subcarriers 2 and 3 may be selected to be allocated to the client signal 1, subcarriers 7, 8, 9, and 10 may be selected to be allocated to the client signal 2, and a subcarrier 16 may be selected to be allocated to the client signal 3.It should be noted that the subcarriers allocated to the client signal may be any consecutive subcarriers that do not overlap with those allocated to other client signals, such as allocating subcarriers 5 and 6 to the client signal 1. However, in a case where only one optical fiber is present from the transmitting end to the receiving end, the subcarriers allocated for an uplink and a downlink of the same client signal should not overlap.

In an exemplary embodiment, the determining the configuration parameters according to the n consecutive subcarriers includes: determining the configuration parameters according to the n consecutive subcarriers in a case where only one client signal is present or only a point-to-point subcarrier connection needs to be established; and determining the configuration parameters according to a plurality of sets of n consecutive subcarriers corresponding to a plurality of client signals in a case where the plurality of client signals are present and a point-to-multipoint subcarrier connection needs to be established, where the number of the subcarriers corresponding to each of the plurality of sets of n consecutive subcarriers is the same or different.

It should be understood that after determining the n consecutive subcarriers required by each client signal, application code corresponding to the n consecutive subcarriers can be determined, thereby obtaining the complete spectrum central frequency and occupied spectral width of the optical tributary signal (OTSi) at the transmitting end, the spectrum central frequency and the occupied spectral width at the receiving end, the bit rate that each subcarrier corresponding to the OTSi is allowed to provide, and the application code for the n consecutive subcarriers. The above-mentioned configuration parameters may enable the transmitting end and the receiving end to clearly identify which consecutive subcarriers are used to carry which client signals.

In a case where only one client signal is present or only a point-to-point subcarrier connection needs to be established, and the above-mentioned configuration parameters are determined through the management and control system, the configuration parameters determined by the management and control system for the transmitting end and the receiving end are the same, including: the spectrum central frequency and the occupied spectral width of the optical tributary signal(OTSi) at the transmitting end, the spectrum central frequency and the occupied spectral width at the receiving end, the bit rate that each subcarrier corresponding to the OTSi is allowed to provide, and the application code for the plurality of sets of n consecutive subcarriers. The difference lies in that in a case where only one client signal is present, an actually established connection is not limited to the point-to-point subcarrier connection, and may also be the point-to-multipoint subcarrier connection for either the uplink or the downlink.

In a case where a plurality of client signals are present and the point-to-multipoint subcarrier connection needs to be established, further determination of whether to establish a point-to-multipoint subcarrier uplink or downlink is needed. Accordingly, in an exemplary embodiment, before the determining the configuration parameters according to a plurality of sets of n consecutive subcarriers corresponding to a plurality of client signals, the method further includes: in a case where a point-to-multipoint subcarrier connection for the downlink needs to be established, and the point-to-multipoint is used to indicate one transmitting end to a plurality of receiving ends, determining a first end node corresponding to each client signal from the plurality of receiving ends, and determining the transmitting end and the first end node as target ends; and in a case where a point-to-multipoint subcarrier connection for the uplink needs to be established, and the point-to-multipoint is used to indicate a plurality of receiving ends to one transmitting end, determining a second end node corresponding to each client signal from the plurality of transmitting ends, and determining the receiving end and the second end node as target ends.

It should be understood that in the case where the point-to-multipoint subcarrier connection for the downlink needs to be established, and the point-to-multipoint is used to indicate one transmitting end to the plurality of receiving ends, the transmitting end commonly corresponding to the plurality of client signals, as well as the first end node (equivalent to a leaf node in other embodiments) on a receiving side corresponding to each of the plurality of client signals may be determined; and in the case where the point-to-multipoint subcarrier connection for the uplink needs to be established, and the point-to-multipoint is used to indicate one transmitting end to the plurality of receiving ends, the receiving end commonly corresponding to the plurality of client signals may be determined first, and the second end node (equivalent to the leaf node in other embodiments) on a transmitting side corresponding to each of the plurality of client signals is determined.

In an exemplary embodiment, the determining the configuration parameters according to a plurality of sets of n consecutive subcarriers corresponding to a plurality of client signals includes: in a case where a point-to-multipoint subcarrier connection for a downlink needs to be established, determining first sub-configuration parameters for the transmitting end according to the plurality of sets of consecutive n subcarriers, and determining second sub-configuration parameters for the first end node according to each of the plurality of sets of consecutive n subcarriers, and determining the first sub-configuration parameters and the second sub-configuration parameters as the configuration parameters, where each client signal has a correspondence with each set of n subcarriers; and in a case where a point-to-multipoint subcarrier connection for an uplink needs to be established, determining third sub-configuration parameters for the receiving end according to the plurality of sets of consecutive n subcarriers, and determining fourth sub-configuration parameters for the second end node according to each of the plurality of sets of consecutive n subcarriers, and determining the third sub-configuration parameters and the fourth sub-configuration parameters as the configuration parameters.

In a case of the point-to-multipoint downlink, the second sub-configuration parameters determined by the management and control system for the first end node corresponding to each client signal include: a spectrum central frequency and an occupied spectral width of the optical tributary signal (OTSi) at the first end node, a bit rate that each subcarrier corresponding to the OTSi is allowed to provide, and application code for the consecutive n subcarriers required for each client signal to be received by each first end node.

In a case of the point-to-multipoint uplink, the fourth sub-configuration parameters determined by the management and control system for the second end node corresponding to each client signal include: a spectrum central frequency and an occupied spectral width of the optical tributary signal (OTSi) at the second end node, a bit rate that each subcarrier corresponding to the OTSi is allowed to provide, and application code for the consecutive n subcarriers required for each client signal to be transmitted by each second end node.

The first or third sub-configuration parameters configured by the management and control system for the transmitting end as the root node in the uplink or the receiving end as the root node in the downlink include: a spectrum central frequency and an occupied spectral width of the optical tributary signal (OTSi) at the transmitting end (or the receiving end), a bit rate that each subcarrier corresponding to the OTSi is allowed to provide, and application code for the plurality of sets of consecutive n subcarriers corresponding to the plurality of client signals.

In an exemplary embodiment, after the determining, according to the bandwidth granularity, a minimum number n of subcarriers required by the client signal, the method further includes: in a case where it is determined that a point-to-multipoint subcarrier connection for the client signal needs to be established and a subcarrier connection is established for either the uplink or the downlink of the point-to-multipoint subcarrier connection, determining the number of optical fibers used for the point-to-multipoint subcarrier connection of the client signal; in a case of a single optical fiber, allocating the consecutive n subcarriers to the client signal from k unallocated subcarriers, where k = m - w, k is an integer greater than 1, and w is used to represent the number of subcarriers allocated to the uplink or the downlink where the subcarrier connection is established, with w being an integer greater than 1; and in a case of two optical fibers in different directions, allocating the consecutive n subcarriers to the client signal from the m subcarriers.

It should be understood that in a point-to-multipoint case, if a point is connected to a leaf node among a plurality of points through a single optical fiber, the subcarrier connection for the uplink or the downlink between the point and the leaf node should be selected from the k unallocated subcarriers of the OTSi, meaning that the subcarriers used for the uplink and the downlink corresponding to the single optical fiber cannot overlap. If a point is connected to a leaf node among the plurality of points through two optical fibers in different directions, the subcarrier connection for the uplink or the downlink between the point and the leaf node may be selected from all the m subcarriers included in the OTSi. That is, the subcarriers used for the uplink and the downlink corresponding to two bidirectional optical fibers may overlap.

Next, the method for establishing a subcarrier connection is further described in conjunction with the following optional embodiments.

The emergence of the subcarriers and coherent technologies enables the transmitter to receive a plurality of client data streams and modulate each client data stream onto different subcarriers for transmission. Each subcarrier may be described and distinguished using different application code. The subcarrier technology has the main advantage of being able to complete the aggregation and splitting of the client signals at an optical layer without the need to first demodulate the signals into electrical layer network signals for aggregation and splitting of the signals at an electrical layer network. Compared to the passive optical network (PON) technology, the subcarrier technology is more flexible and can provide a bandwidth with a bit rate greater than 50 G, as well as flexible bandwidth allocation capabilities. Based on this, an optional embodiment of the present disclosure provides a method and apparatus for managing and controlling subcarriers in an optical layer network to solve the problem about the lack of management and control methods for providing network data transmission services to clients using the subcarrier technology in the prior art. The use of the subcarrier technology in the present disclosure is mainly applied to two scenarios: one is the use of the subcarrier technology in a point-to-point (P2P) scenario, and the other is the use of the subcarrier technology in a point-to-multipoint (P2MP) scenario.

Fig. 4 is a schematic diagram of an end-to-end network architecture for an optical tributary signal (OTSi) according to an optional embodiment of the present disclosure. As shown in Fig. 4, the OTSi signal represents an end-to-end optical signal from a transmitter to a receiver. The OTSi optical signal may be a single modulated optical carrier or a group of subcarriers. The OTSi is described using a central frequency, a spectral width, and application code. A management and control system configures, based on wavelength constraints, the application code for the tunable transmitter and receiver through a southbound interface. The southbound interface between the management and control system and a device includes two parts: a protocol and a management and control model. The protocol may be an interface protocol such as Netconf or PCEP, and content carried in the protocol is the management and control model. The protocol has a function of establishing a connection between the management and control system and the device and carrying the content of the management and control model, while the configuration of the application code for the OTSi for the transmitter and the receiver, the configuration of a multiplexer/demultiplexer, the forwarding configuration of ROADM, and the configuration of an amplifier are implemented by the management and control model.

It should be noted that Netconf stands for a network configuration protocol, PCEP stands for a path computation element protocol, and ROADM stands for a reconfigurable optical add-drop multiplexer in optical transmission networks.

Further, Fig. 4 illustrates four end-to-end OTSi signals. A transmission path involves four transmitters each emitting the OTSi signal. The four OTSi signals are aggregated by a multiplexer and transmitted over a single optical fiber. After passing through an amplifier and being forwarded by the ROADM, the signals reach a demultiplexer. The demultiplexer replicates optical signals into four copies, each transmitted to a corresponding receiver. The receivers then separate out the corresponding optical signals through coherent demodulation. For each incoherent receiver, a wavelength selective switch (WSS) is typically used in conjunction with the demultiplexer to achieve correct reception of the optical signals. Regarding the modulation of the client data streams, optional embodiments of the present disclosure adopt a conventional relationship between transmitters and electrical layer client signal data streams, which is a 1:1 relationship. A single client signal data stream is directly modulated into an optical-layer OTSi signal.

It should be noted that the subcarrier technology mentioned in the present disclosure may utilize the carrier shaping technology described in [ITU-T G.sup39]. The difference lies in that each subcarrier in the optional embodiments of the present disclosure may be used to carry different electrical layer client signals. Industry manufacturers and operators have varying terms for the optical layer network. Some use optical transport networks, while some other manufacturers employ different description approaches such as wavelength division networks, optical transport networks, and level 0 networks (L0). Different terms are provided for names of optical signals, such as the optical tributary signal (OTSi) and an optical channel (OCh), which are adopted by different manufacturers and operators. Therefore, it should be noted that the present disclosure uses the terms of the optical layer network and the optical tributary signal, but other terms such as the optical transport network and the optical channel also fall within the scope limited by the present disclosure.

A network management and control method for the subcarriers is described in both the point-to-point (P2P) scenario and the point-to-multipoint (P2MP) scenario through three specific embodiments. The embodiments provide solutions for the interaction between the management and control system and the optical transport network to establish the end-to-end P2P connection and the P2MP connection.

### Embodiment 1: Networking Architecture and Management and Control for Subcarriers in Point-to-Point (P2P) Scenario

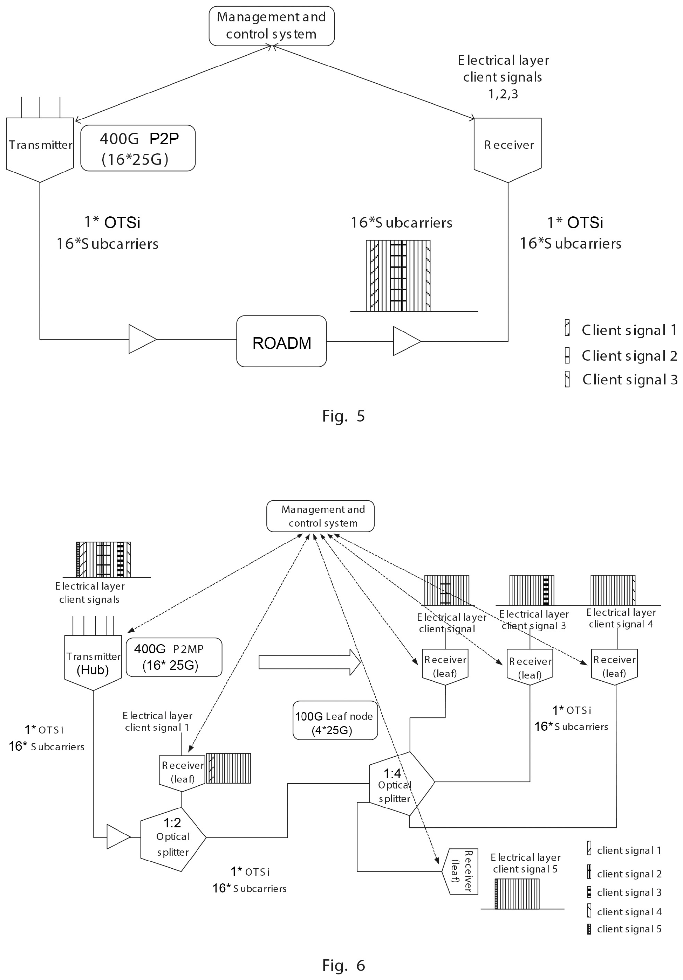

Fig. 5 is an architectural diagram of network management and control for subcarriers in a P2P scenario according to an optional embodiment of the present disclosure. In this scenario, a transmitter and a receiver support the transmission and reception of a data stream at a 400G bit rate. The data stream at the 400G bit rate is modulated at a transmitting end into a single OTSi signal at the 400G bit rate for transmission between the transmitter and receiver.

The transmitter and the receiver respectively support the modulation and demodulation of the subcarriers, and the data stream that each subcarrier can modulate has the same bit-rate granularity. According to a support capability of the transmitter and the receiver, the bit-rate granularity of the data stream may be fixed or tunable. Herein, it is assumed that the bandwidth granularity is the 25G bit rate, meaning that a single OTSi signal at the 400G bit rate contains 16 subcarriers.

The network scenario in Fig. 5 includes a transmission of three end-to-end electrical layer client signals. This embodiment describes the management and control for a subcarrier network according to the network scenario in Fig. 5:
based on the above-mentioned attributes, the management and control system calculates, according to requirements for a data stream bit rate of a client signal, a minimum number of subcarriers required by the client signal.

For example, in Fig. 5, the client signal 1 requires a bandwidth of 48G bit rate, the client signal 2 requires a bandwidth of 100G bit rate, and the client signal 3 requires a bandwidth of 20G bit rate. According to information about the required data stream bit rate of the client signal, the management and control system calculates the minimum number of subcarriers required by the client signal. The client signal 1 requires 2 subcarriers, the client signal 2 requires 4 subcarriers, and the client signal 3 requires 1 subcarrier.

Since each subcarrier occupies the same spectral width, based on the central frequency and the occupied spectral width of the OTSi spectrum, the management and control system determines equal division into 16 subcarriers, thereby deriving the central frequency and the occupied spectral width used by each subcarrier. The management and control system calculates the number of subcarriers that need to be allocated to clients based on the principle of avoiding wavelength conflicts, allocating the subcarriers 2 and 3 to the client 1, the subcarriers 7, 8, 9, and 10 to the client 2, and the subcarrier 16 to the client 3.

It should be noted that in the scenario where the subcarriers are used for the point-to-point client signal transmission, the management and control system distributes the configuration parameters to the transmitter and the receiver through a southbound interface to establish the end-to-end subcarrier connection. The parameters distributed by the management and control system through the southbound interface include:
a transmitter OTSi spectrum central frequency;
a transmitter OTSi occupied spectral width;
a receiver OTSi spectrum central frequency;
a receiver OTSi occupied spectral width;
a bit rate provided by each subcarrier; and
application code for each subcarrier of the transmitter and the receiver.

Accordingly, based on the above-mentioned subcarrier allocation, the management and control system transmits, by the southbound interface, configuration information (equivalent to the configuration parameters in the above-mentioned embodiments)including the application code for each subcarrier, the OTSi spectrum central frequency, and the OTSi occupied spectral width to the transmitter and the receiver. The transmitter and the receiver configure each subcarrier, as well as a transmitting end Laser and a receiving end local oscillator according to the information from the management and control system, to establish the subcarrier connection in the point-to-point (P2P) scenario. The receiver uses the coherent technology to decode the client signals 1, 2, and 3.This scenario may be applied to data center interconnection scenarios, where the subcarriers may carry different client services.

### Embodiment 2: Networking Architecture and Management and Control for Subcarrier Downlink in Point-to-Multipoint (P2MP) Scenario

Fig. 6 is a diagram of a network transmission architecture for a subcarrier downlink in a P2MP scenario according to an optional embodiment of the present disclosure. A root node transmitter supports transmitting of data streams at a 400 G bit rate, while five leaf nodes support reception of data streams with a maximum bit rate of 100 G. The data stream at the 400 G bit rate, after modulation, becomes a single OTSi signal at the 400 G bit rate transmitted between the root node transmitter and leaf node receivers. Upon receiving an optical signal transmitted from a root node, each leaf node selects subcarriers allocated to it according to pre-configurations.

Both the transmitter and the receivers support subcarrier transmission, and the bit-rate granularity of the data streams for the subcarriers supported by the transmitter and the receivers must be identical. According to a support capability of the transmitter and the receivers, the bit-rate granularity of the data stream may be fixed or tunable. Herein, it is assumed that the bit-rate granularity is the 25G bit rate, meaning that a single OTSi signal at the 400G bit rate contains 16 subcarriers.

The network scenario in Fig. 6 includes a transmission of five end-to-end electrical layer client signals. This embodiment describes the management and control for a subcarrier network according to the network scenario in Fig. 6.

Based on the above-mentioned attributes, the end-to-end management and control system calculates corresponding bandwidth requirements according to requirements of client signals for data stream bit rates. For example, in Fig. 6, the client signal 1 requires a bandwidth of 48 G bit rate, the client signal 2 requires a bandwidth of 100 G bit rate, the client signal 3 requires a bandwidth of 40 G bit rate, the client signal 4 requires a bandwidth of 23 G bit rate, and the client signal 5 requires a bandwidth of 15 G bit rate.

According to bit rate information required by the client signal data streams, the management and control system calculates a minimum number of subcarriers that can satisfy the client signals. The client signal 1 requires 2 subcarriers, the client signal 2 requires 4 subcarriers, the client signal 3 requires 2 subcarriers, the client signal 4 requires 1 subcarrier, and the client signal 5 requires 1 subcarrier.

Since each subcarrier occupies the same spectral width, based on a central frequency and an occupied spectral width of a root node OTSi spectrum and equal division into 16 portions, a central frequency and an occupied spectral width used by each subcarrier may be derived. The management and control system calculates the number of subcarriers that need to be allocated to clients based on the principle of avoiding wavelength conflicts, allocating the subcarriers 2 and 3 to the client 1, the subcarriers 7, 8, 9, and 10 to the client 2, the subcarriers 13 and 14 to the client 3, the subcarrier 16 to the client 4, and the subcarrier 1 to the client 5.

It should be noted that in the scenario where the subcarriers are used for the point-to-multipoint downlink client signal bit stream transmission, the management and control system distributes the configuration parameters to the transmitter and the leaf node receiver through a southbound interface to establish the downlink subcarrier connection. The parameters distributed by the management and control system through the southbound interface include:
a transmitting end OTSi spectrum central frequency;
a transmitting end OTSi occupied spectral width;
a receiving end OTSi spectrum central frequency;
a receiving end OTSi occupied spectral width;
a bit rate provided by each subcarrier; and
application code for each subcarrier of the transmitter and the receiver.

Based on the above-mentioned subcarrier allocation, the management and control system first transmits configuration information including the application code for each subcarrier, the OTSi spectrum central frequency, and the OTSi occupied spectral width to a transmitter root node, modulating all client signals onto corresponding subcarriers.

Secondly, on a leaf node receiver side, due to asymmetric capabilities between the receiver side and the transmitter, the receiver supports a maximum of 100G signal reception, namely reception of a maximum of four subcarriers. The receiver receives the subcarrier configuration information distributed by the management and control system, including the application code for each subcarrier, the OTSi spectrum central frequency, and the OTSi occupied spectral width. The receiver completes configurations of a local oscillator of the receiver and each subcarrier according to the above-mentioned configuration information, thereby establishing the subcarrier connection in the point-to-multipoint (P2MP) scenario. Each receiver employs the coherent technology to decode the client signals 1, 2, 3, 4, and 5.This embodiment is applicable to scenarios such as industrial parks with high traffic demands where existing PON technologies cannot satisfy bandwidth requirements of 50G or above.

### Embodiment 3: Networking Architecture and Management and Control for Subcarrier Uplink in Point-to-Multipoint (P2MP) Scenario

In the point-to-multipoint (P2MP) scenario, uplink network traffic and downlink network traffic may not necessarily be symmetric. Therefore, according to actual conditions, uplink and downlink subcarrier signals can be placed on the same optical fiber or on two optical fibers in different directions.

If the two optical fibers in the different directions are used, that is, a downlink and an uplink utilize different optical fibers, wavelength conflicts between subcarriers used in the uplink and the downlink do not need to be considered, and only unidirectional wavelength conflicts between the subcarriers need to be considered. If a single optical fiber is used, that is, the downlink and the uplink share the same optical fiber, the use of the same subcarriers needs to be avoided in the uplink and the downlink.

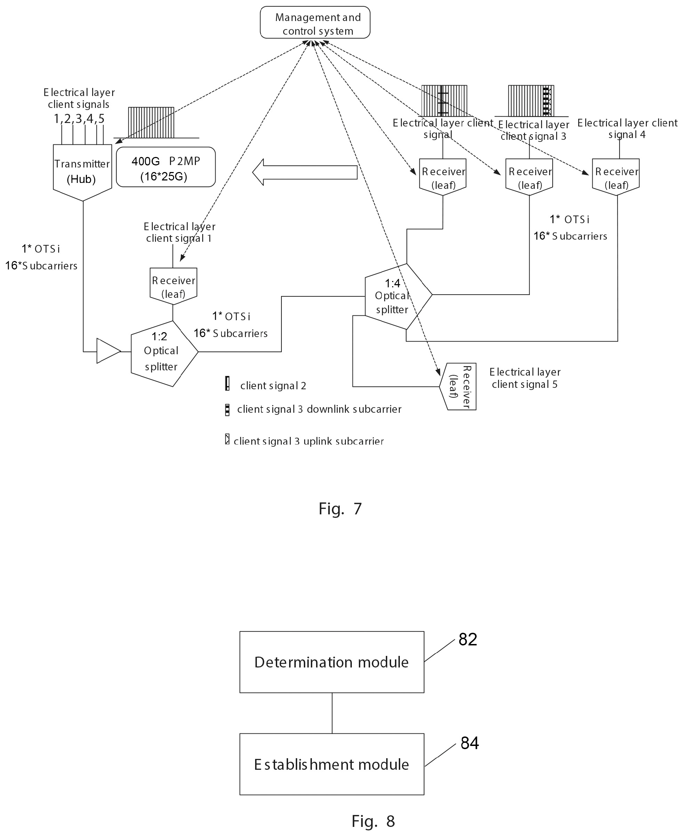

Fig. 7 is a diagram of a network transmission architecture for a subcarrier uplink in a P2MP scenario according to an optional embodiment of the present disclosure. A root node receiver supports reception of data streams at a 400 G bit rate, while five leaf nodes support data streams at a maximum of 100G bit rate. A single optical fiber is used between a transmitter used for an electrical layer client signal 3 and a 1:4 multiplexer; and two optical fibers in different directions are used between the transmitter used for an electrical layer client signal 2 and the 1:4 multiplexer. Each leaf node transmits an optical signal to a root node using pre-configured subcarriers.

Both the transmitter and the receiver support modulation using a subcarrier method, and the data stream bandwidth granularity of the subcarriers that the transmitter and the receiver are required to support must be the same. According to a support capability of the transmitter and the receiver, the bit-rate granularity of the data stream may be fixed or tunable. Herein, it is assumed that the bandwidth granularity is 25G bit rate.

Currently, the network scenario in Fig. 7 includes an uplink transmission of five end-to-end electrical layer client signals. This embodiment describes the establishment of uplink subcarriers 2 and 3 according to the network scenario in Fig. 7.

Based on the above-mentioned attributes, the end-to-end management and control system calculates a minimum number of subcarriers that can satisfy the client signals according to requirements of the client signals for bit rates, such as the uplink signal of the client signal 2 requiring a bit rate of 100G and the uplink signal of the client signal 3 requiring a bit rate of 25G in Fig. 7, and
information about the bit rates required by the client signals. The client signal 2 requires four subcarriers, while the client signal 3 requires one subcarrier.

Since each subcarrier occupies the same spectral width, based on a central frequency and an occupied spectral width of a root node OTSi spectrum and equal division into 16 portions, the central frequency and the occupied spectral width used by each subcarrier may be derived.The management and control system calculates the number of subcarriers that need to be allocated to the clients based on the principle of avoiding wavelength conflicts, allocating the four subcarriers 7, 8, 9, and 10 to the client 2, and the subcarrier 15 to the client 3.

It should be noted that in the scenario where the subcarriers are used for the point-to-multipoint uplink client signal transmission, the management and control system distributes configuration parameters to the leaf node transmitter and the root node receiver through a southbound interface to establish an uplink subcarrier connection. The parameters distributed by the management and control system through the southbound interface include:
a transmitting end OTSi spectrum central frequency;
a transmitting end OTSi occupied spectral width;
a receiving end OTSi spectrum central frequency;
a receiving end OTSi occupied spectral width;
a bit rate provided by each subcarrier; and
application code for each subcarrier of the transmitter and the receiver.

Based on the above-mentioned subcarrier allocation, the management and control system first transmits configuration information including the application code for each subcarrier, the OTSi spectrum central frequency, and the OTSi occupied spectral width to the receiver root node, and the root node receiver completes demodulation of the client signals by configuring a local oscillator.

On a leaf node transmitter side, due to asymmetric capabilities between the receiver side and the transmitter, the transmitter supports a maximum of transmission of 100G signals, namely reception of a maximum of four subcarriers. The transmitter receives the configuration information from the management and control system, including the application code for each subcarrier, the OTSi spectrum central frequency, and the OTSi occupied spectral width. The transmitter completes the establishment of the uplink subcarrier connection in the point-to-multipoint (P2MP)scenario, and each receiver uses the coherent technology to decode the client signals 2 and 3.

In this embodiment, an apparatus for establishing a subcarrier connection is further provided. The apparatus is configured to implement the above-mentioned embodiments and preferred implementations, and details that have been described are not repeated.The term "module" used as below may be a combination of software and/or hardware implementing preset functions.A device described in the following embodiments is preferably implemented by the software, but it is possible and conceivable for implementing the device through the hardware or a combination of the software and the hardware.

Fig. 8 is a structural block diagram of an apparatus for establishing a subcarrier connection according to the present disclosure. As shown in Fig. 8, the apparatus for establishing a subcarrier connection includes:
a determination module 82, configured to determine following configuration parameters according to a first bit rate required by a client signal: a spectrum central frequency of an optical tributary signal (OTSi) at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier; and
an establishment module 84, configured to establish the subcarrier connection according to the configuration parameters.

Through the above-mentioned modules, the following configuration parameters are determined according to the first bit rate required by the client signal: the spectrum central frequency of the optical tributary signal (OTSi) at the transmitting end, the spectral width occupied by the OTSi at the transmitting end, the spectrum central frequency of the OTSi at the receiving end, the spectral width occupied by the OTSi at the receiving end, the bit rate that each subcarrier corresponding to the OTSi is allowed to provide, and the application code for the subcarrier; and the subcarrier connection is established according to the configuration parameters. In other words, by determining the relevant configuration parameters of the optical tributary signal (OTSi) corresponding to the transmitting end and the receiving end according to the first bit rate required by the client signal, and then establishing the subcarrier connection according to the configuration parameters, the technical problem of a lack of a management and control technology for subcarriers in the related art is solved.

In an exemplary embodiment, the determination module 82 is further configured to determine a second bit rate of a data stream supported for transmission by a target end, and determine a bandwidth granularity of each subcarrier supported for modulation or demodulation by the target end, where the target end includes at least one of the following: the transmitting end or the receiving end, and the transmitting end is configured to modulate each subcarrier, while the receiving end is configured to demodulate each subcarrier; and determine, according to the second bit rate and the bandwidth granularity, that the OTSi includes m subcarriers, where each subcarrier corresponding to the OTSi is one of the m subcarriers, and m is an integer greater than 1.

In an exemplary embodiment, the determination module 82 is further configured to determine a first central frequency of a spectrum of the OTSi and a first spectral width occupied by the spectrum; and determine, according to a value of m, the first central frequency, and the first spectral width, a second central frequency of each subcarrier and a second spectral width occupied by the spectrum.

In an exemplary embodiment, the determination module 82 is further configured to determine, according to the bandwidth granularity, a minimum number n of subcarriers required by the client signal; allocate n consecutive subcarriers from the m subcarriers to the client signal according to the minimum number n, where n is an integer greater than 1; and determine the configuration parameters according to the n consecutive subcarriers.

In an exemplary embodiment, the determination module 82 is further configured to determine the configuration parameters according to the n consecutive subcarriers in a case where only one client signal is present or only a point-to-point subcarrier connection needs to be established; and determine the configuration parameters according to a plurality of sets of n consecutive subcarriers corresponding to a plurality of client signals in a case where the plurality of client signals are present and a point-to-multipoint subcarrier connection needs to be established, where the number of the subcarriers corresponding to each of the plurality of sets of n consecutive subcarriers is the same or different.

In an exemplary embodiment, the determination module 82 is further configured to, in a case where a point-to-multipoint subcarrier connection for the downlink needs to be established, and the point-to-multipoint is used to indicate one transmitting end to a plurality of receiving ends, determine a first end node corresponding to each client signal from the plurality of receiving ends, and determine the transmitting end and the first end node as the target ends; and in a case where a point-to-multipoint subcarrier connection for the uplink needs to be established, and the point-to-multipoint is used to indicate a plurality of receiving ends to one transmitting end, determine a second end node corresponding to each client signal from the plurality of transmitting ends, and determine the receiving end and the second end node as the target ends.

In an exemplary embodiment, the determination module 82 is further configured to: in a case where the point-to-multipoint subcarrier connection for the downlink needs to be established, determine first sub-configuration parameters for the transmitting end according to the plurality of sets of consecutive n subcarriers, and determine second sub-configuration parameters for the first end node according to each of the plurality of sets of consecutive n subcarriers, and determine the first sub-configuration parameters and the second sub-configuration parameters as the configuration parameters, where each client signal has a correspondence with each set of n subcarriers; and in a case where the point-to-multipoint subcarrier connection for the uplink needs to be established, determine third sub-configuration parameters for the receiving end according to the plurality of sets of consecutive n subcarriers, and determine fourth sub-configuration parameters for the second end node according to each of the plurality of sets of consecutive n subcarriers, and determine the third sub-configuration parameters and the fourth sub-configuration parameters as the configuration parameters.

In an exemplary embodiment, the determination module 82 is further configured to, in a case where it is determined that a point-to-multipoint subcarrier connection for the client signal needs to be established and a subcarrier connection is established for either the uplink or the downlink of the point-to-multipoint subcarrier connection, determine the number of optical fibers used for the point-to-multipoint subcarrier connection of the client signal; in a case of a single optical fiber, allocate the consecutive n subcarriers to the client signal from k unallocated subcarriers, where k = m - w, k is an integer greater than 1, and w is used to represent the number of subcarriers allocated to the uplink or the downlink where the subcarrier connection is established, with w being an integer greater than 1; and in a case of two optical fibers in different directions, allocate the consecutive n subcarriers to the client signal from the m subcarriers.

According to the descriptions of the above-mentioned implementations, those skilled in the art can clearly know that the method according to the above-mentioned embodiments may be implemented by software and a necessary general-purpose hardware platform, and certainly, may also be implemented by hardware, but the former is a preferred implementation in many cases.Based on the understanding, the technical solutions of the present disclosure essentially or parts making contribution to the prior art may be embodied in the form of a software product, and the computer software product is stored in a storage medium (e.g., a ROM/RAM, a magnetic disk, or a compact disc) and includes a plurality of instructions used to cause a terminal device(e.g., a mobile phone, a computer, a server, or a network device ) to perform the method according to the embodiments of the present disclosure.

In an exemplary embodiment, the above-mentioned computer-readable storage medium may include, but is not limited to: a U disk, a read-only memory (ROM), a random access memory (RAM), a mobile hard disk, a magnetic disk, a compact disc, or other media capable of storing computer programs.

For specific examples in this embodiment, reference may be made to the examples described in the above-mentioned embodiments and the exemplary implementations, and details are not further provided in this embodiment.

An embodiment of the present disclosure further provides an electronic apparatus including a memory and a processor. The memory has a computer program stored therein, and the processor is configured to run the computer program so as to perform the steps in any one of the above-mentioned method embodiments.

Optionally, in this embodiment, the above-mentioned processor may be configured to perform the following steps through the computer program:
S1: Determine following configuration parameters according to a first bit rate required by a client signal: a spectrum central frequency of an optical tributary signal (OTSi) at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier.
S2: Establish the subcarrier connection according to the configuration parameters.

In an exemplary embodiment, the above-mentioned electronic apparatus may further include a transmission device and an input/output device. The transmission device is connected with the above-mentioned processor, and the input/output device is connected with the above-mentioned processor.

Optionally, in this embodiment, the above-mentioned electronic apparatus may be further configured to perform, through the computer program, the above-mentioned steps including S1: determining the following configuration parameters according to the first bit rate required by the client signal: the spectrum central frequency of the optical tributary signal (OTSi) at the transmitting end, the spectral width occupied by the OTSi at the transmitting end, the spectrum central frequency of the OTSi at the receiving end, the spectral width occupied by the OTSi at the receiving end, the bit rate that each subcarrier corresponding to the OTSi is allowed to provide, and the application code for the subcarrier; and S2: establishing the subcarrier connection according to the configuration parameters.

For specific examples in this embodiment, reference may be made to the examples described in the above-mentioned embodiments and the exemplary implementations, and details are not further provided in this embodiment.

Obviously, those skilled in the art should understand that the modules or steps in the present disclosure described above may be implemented through a general-purpose computing apparatus, which may be centralized in a single computing apparatus or distributed over a network formed by a plurality of computing apparatuses, and may be implemented by executable program code of the computing apparatus, such that the modules or steps may be stored in a storage apparatus to be executed by the computing apparatus; and in some cases, the shown or described steps may be performed in a different order than presented herein, or the modules or steps may be made into various integrated circuit modules, or more of the modules or steps may be made into a single integrated circuit module for implementation. Therefore, the present disclosure is not limited to any specific hardware and software combination.

The above-mentioned contents are merely preferred embodiments of the present disclosure, and are not intended to limit the present disclosure, and for those skilled in the art, the present disclosure may have various modifications and changes. Any modification, equivalent replacement, improvement, etc. made within the principle of the present disclosure shall fall within the scope of protection of the present disclosure.

## Claims

1. A method for establishing a subcarrier connection, comprising:
determining following configuration parameters according to a first bit rate required by a client signal: a spectrum central frequency of an Optical Tributary Signal, OTSi, at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier; and
establishing the subcarrier connection according to the configuration parameters.

2. The method for establishing a subcarrier connection according to claim 1, wherein before the determining following configuration parameters according to a first bit rate required by a client signal, the method further comprises:
determining a second bit rate of a data stream supported for transmission by a target end, and determining a bandwidth granularity of each subcarrier supported for modulation or demodulation by the target end, wherein the target end comprises at least one of the following: the transmitting end or the receiving end, and the transmitting end is configured to modulate each subcarrier, while the receiving end is configured to demodulate each subcarrier; and
determining, according to the second bit rate and the bandwidth granularity, that the OTSi comprises m subcarriers, wherein each subcarrier corresponding to the OTSi is one of the m subcarriers, and m is an integer greater than 1.

3. The method for establishing a subcarrier connection according to claim 2, wherein after the determining, according to the second bit rate and the bandwidth granularity, that the OTSi comprises m subcarriers, the method further comprises:
determining a first central frequency of a spectrum of the OTSi and a first spectral width occupied by the spectrum; and
determining, according to a value of m, the first central frequency, and the first spectral width, a second central frequency of each subcarrier and a second spectral width occupied by the spectrum.

4. The method for establishing a subcarrier connection according to claim 2, wherein the determining following configuration parameters according to a first bit rate required by a client signal: a spectrum central frequency of the OTSi at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier comprises:
determining, according to the bandwidth granularity, a minimum number n of subcarriers required by the client signal;
allocating n consecutive subcarriers from the m subcarriers to the client signal according to the minimum number n, wherein n is an integer greater than 1; and
determining the configuration parameters according to the n consecutive subcarriers.

5. The method for establishing a subcarrier connection according to claim 4, wherein the determining the configuration parameters according to the n consecutive subcarriers comprises:
determining the configuration parameters according to the n consecutive subcarriers in a case where only one client signal is present or only a point-to-point subcarrier connection needs to be established; and
determining the configuration parameters according to a plurality of sets of n consecutive subcarriers corresponding to a plurality of client signals in a case where the plurality of client signals are present and a point-to-multipoint subcarrier connection needs to be established, wherein the number of the subcarriers corresponding to each of the plurality of sets of n consecutive subcarriers is the same or different.

6. The method for establishing a subcarrier connection according to claim 5, wherein before the determining the configuration parameters according to a plurality of sets of n consecutive subcarriers corresponding to a plurality of client signals, the method further comprises:
in a case where a point-to-multipoint subcarrier connection for a downlink needs to be established, and the point-to-multipoint is used to indicate one transmitting end to a plurality of receiving ends, determining a first end node corresponding to each client signal from the plurality of receiving ends, and determining the transmitting end and the first end node as the target ends; and
in a case where a point-to-multipoint subcarrier connection for an uplink needs to be established, and the point-to-multipoint is used to indicate a plurality of receiving ends to one transmitting end, determining a second end node corresponding to each client signal from the plurality of transmitting ends, and determining the receiving end and the second end node as the target ends.

7. The method for establishing a subcarrier connection according to claim 6, wherein the determining the configuration parameters according to a plurality of sets of n consecutive subcarriers corresponding to a plurality of client signals comprises:
in a case where the point-to-multipoint subcarrier connection for the downlink needs to be established, determining first sub-configuration parameters for the transmitting end according to the plurality of sets of consecutive n subcarriers, and determining second sub-configuration parameters for the first end node according to each of the plurality of sets of consecutive n subcarriers, and determining the first sub-configuration parameters and the second sub-configuration parameters as the configuration parameters, wherein each client signal has a correspondence with each set of n subcarriers; and
in a case where the point-to-multipoint subcarrier connection for the uplink needs to be established, determining third sub-configuration parameters for the receiving end according to the plurality of sets of consecutive n subcarriers, and determining fourth sub-configuration parameters for the second end node according to each of the plurality of sets of consecutive n subcarriers, and determining the third sub-configuration parameters and the fourth sub-configuration parameters as the configuration parameters.

8. The method for establishing a subcarrier connection according to claim 4, wherein after the determining, according to the bandwidth granularity, a minimum number n of subcarriers required by the client signal, the method further comprises:
in a case where it is determined that a point-to-multipoint subcarrier connection for the client signal needs to be established and a subcarrier connection is established for either the uplink or the downlink of the point-to-multipoint subcarrier connection, determining the number of optical fibers used for the point-to-multipoint subcarrier connection of the client signal;
in a case of a single optical fiber, allocating the consecutive n subcarriers to the client signal from k unallocated subcarriers, wherein k = m - w, k is an integer greater than 1, and w is used to represent the number of subcarriers allocated to the uplink or the downlink where the subcarrier connection is established, with w being an integer greater than 1; and
in a case of two optical fibers in different directions, allocating the consecutive n subcarriers to the client signal from the m subcarriers.

9. An apparatus for establishing a subcarrier connection, comprising:
a determination module, configured to determine following configuration parameters according to a first bit rate required by a client signal: a spectrum central frequency of an Optical Tributary Signal, OTSi, at a transmitting end, a spectral width occupied by the OTSi at the transmitting end, a spectrum central frequency of the OTSi at a receiving end, a spectral width occupied by the OTSi at the receiving end, a bit rate that each subcarrier corresponding to the OTSi is allowed to provide, and application code for the subcarrier; and
an establishment module, configured to establish the subcarrier connection according to the configuration parameters.

10. A computer readable storage medium storing a computer program, which when executed by a processor to cause the processor to perform the method as claimed in any one of claims 1 to 8.

11. An electronic apparatus, comprising a memory and a processor, wherein a computer program is stored in the memory, and the processor is configured to execute the computer program to perform the method as claimed in any one of claims 1 to 8.
